# EUROPEAN PATENT APPLICATION

(11) **EP 4 779 997 A1**
(43) Date of publication of application: **22.07.2026**
(21) Application number: 26151938.3
(22) Date of filing: 15.01.2026
(51) Int. Cl.: H04N 21/431, H04N 21/439, H04N 21/442, H04N 21/462, H04N 21/4722, H04N 21/81

(54) **DISPLAY DEVICE AND OPERATING METHOD THEREOF**

(30) Priority: 21.01.2025 KR 20250008904
(71) Applicant: LG Electronics Inc., Yeongdeungpo-gu Seoul 07336 (KR)
(72) Inventor: CHO, Jaehoon, Seoul (KR); AHN, Jongyoon, Seoul (KR); LEE, Chaelin, Seoul (KR); LEE, Younkyung, Seoul (KR)
(74) Representative: Vossius & Partner Patentanwälte Rechtsanwälte mbB

(57) **Abstract**

A display device according to an embodiment of the present disclosure may comprise a display configured to play a video content; and a controller configured to obtain information of the video content, music being output together with the video content, and a playback point of the video content corresponding to the output point of the music, obtain music information corresponding to the music, and display, on the display, a music magazine screen based on the information of the video content the playback point, and a music history including the music information according to a request.

## Description

### BACKGROUND OF THE INVENTION

### 1.Field of the Invention

The present disclosure relates to a display device, and more particularly, to a display device for browsing viewing information and music information of video content.

### 2. Discussion of the Related Art

Digital TV services using wired or wireless communication networks are becoming common. Digital TV services may provide various services which cannot be provided by the existing analog broadcast service.

For example, Internet protocol television (IPTV) and smart TV services which are types of digital TV services provide interactivity to allow user to actively select a type of a program to be watched, a viewing time, etc. The IPTV and smart TV services may provide various additional services, such as Internet search, home shopping and online games, based on such interactivity.

Many viewers search for music/musician related to video content after watching it on TV, such as movie/drama.

For many people, the experience of accidentally discovering music while watching video content and consuming that music, even if it was not their intention, becomes a meaningful user experience.

Previously, users searched for music by directly searching the Internet or using their smartphone, but there was no user experience that could provide music that could be played while watching video content.

### SUMMARY OF THE INVENTION

The purpose of the present disclosure may be to automatically recognize music played together with video content, and provide viewing information and music information on a single screen by linking them.

The purpose of the present disclosure may be to provide a screen that allows browsing of information about music that passed by while watching video content according to a viewing schedule.

The purpose of the present disclosure may be to provide a method for easily checking and playing video content viewed in the past and music played together with the video content.

The purpose of the present disclosure may be to automatically search music that is playing along with viewing video content.

The purpose of the present disclosure may be to provide information about music played within video content after viewing of the video content has ended.

The purpose of the present disclosure may be to provide only a portion of information of a music magazine screen when the screen is switched to a low power mode while being displayed.

The purpose of the present disclosure may be to provide a method for quickly switching to a music magazine screen while displaying information about music being played under a low power mode.

A display device according to an embodiment of the present disclosure may comprise a display configured to play a video content; and a controller configured to obtain information of the video content, music being output together with the video content, and a playback point of the video content corresponding to the output point of the music, obtain music information corresponding to the music, and display, on the display, a music magazine screen based on the information of the video content the playback point, and a music history including the music information according to a request.

A method of a display device according to an embodiment of the present disclosure may comprise playing video content; obtaining information of the video content, music being output together with the video content, and a playback point of the video content corresponding to the output point of the music; obtaining music information corresponding to the music; and displaying a music magazine screen based on the information of the video content the playback point, and a music history including the music information according to a request.

According to an embodiment of the present disclosure, a user may easily access video content and music viewed in the past through a music magazine screen.

According to an embodiment of the present disclosure, a user may intuitively check video content and music viewed in the past without a separate search process, thereby enjoying an improved user experience.

According to an embodiment of the present disclosure, easy access is possible to a specific playback point in time of video content viewed in the past and to a start point in time of music output.

According to an embodiment of the present disclosure, only minimal information may be displayed as the power mode of the display device is switched from a normal power mode to a low power mode. Accordingly, power consumption of the display device may be reduced, while only necessary information may be intuitively provided to the user.

According to an embodiment of the present disclosure, a quick transition to a music magazine screen while displaying information about music being played under a low power mode may be possible. Accordingly, a user experience may be improved as a seamless flow is provided.

### BRIEF DESCRIPTION OF THE DRAWINGS

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of using a remote control device according to an embodiment of the present disclosure.
FIG. 5 is a drawing for explaining the configuration of a system according to one embodiment of the present disclosure.
FIG. 6 is a flowchart illustrating a method of operating a display device according to an embodiment of the present disclosure.
FIGS. 7A to 7C are drawings explaining a process of determining whether music is played using subtitles output together with video content according to an embodiment of the present disclosure.
FIGS. 8A to 8F are diagrams illustrating examples of providing a notification indicating that music information is being searched or that music information has been acquired according to an embodiment of the present disclosure.
FIGS. 9A to 9F are drawings illustrating a music magazine screen according to an embodiment of the present disclosure.
FIGS. 10A and 10B are drawings illustrating changes in the layout of a music magazine screen according to an embodiment of the present disclosure.
FIGS. 11A to 11E are diagrams illustrating scenarios related to the playback of music corresponding to music items included on a music magazine screen according to an embodiment of the present disclosure.
FIG. 12 is a diagram illustrating a process for inducing subscription to a streaming video service for playing video content when a command for playing video content is received through a music magazine screen according to one embodiment of the present disclosure.
FIGS. 13A to 13C are drawings explaining examples of displaying related products together using music information within video content viewed by a user.
FIG. 14 is a flowchart for a method of operating a display device according to another embodiment of the present disclosure.
FIG. 15A and FIG. 15B are diagrams explaining how displayed information changes as the power mode of the display device switches from a normal power mode to a low power mode.
FIGS. 16A to 17E are drawings explaining a scenario of linking a music magazine screen between a display device and a terminal according to an embodiment of the present disclosure.
FIGS. 18A and 18B are diagrams illustrating an example of switching an AOD screen to another screen according to one embodiment of the present disclosure.

### DETAILED DESCRIPTION OF THE PREFERRED EMBODIMENTS

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

The display device according to an embodiment of the present disclosure is, for example, an intelligent display device in which a computer support function is added to a broadcast reception function, and is faithful to a broadcast reception function and has an Internet function added thereto, such as a handwritten input device, a touch screen Alternatively, a more user-friendly interface such as a spatial remote control may be provided. In addition, it is connected to the Internet and a computer with the support of a wired or wireless Internet function, so that functions such as e-mail, web browsing, banking, or games may also be performed. A standardized general-purpose OS may be used for these various functions.

Accordingly, in the display device described in the present disclosure, various user-friendly functions may be performed because various applications may be freely added or deleted, for example, on a general-purpose OS kernel. More specifically, the display device may be, for example, a network TV, HBBTV, smart TV, LED TV, OLED TV, and the like, and may be applied to a smart phone in some cases.

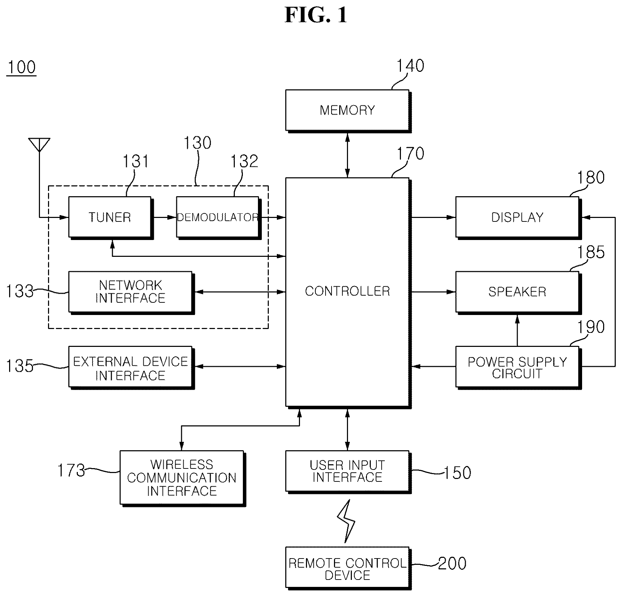

FIG. 1 is a block diagram showing a configuration of a display device according to an embodiment of the present disclosure.

Referring to FIG. 1, a display device 100 may include an image receiver 130, an external device interface 135, a memory 140, a user input interface 150, a controller 170, a wireless communication interface 173, a display 180, a speaker 185, and a power supply circuit 190.

The image receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 the speaker 185.

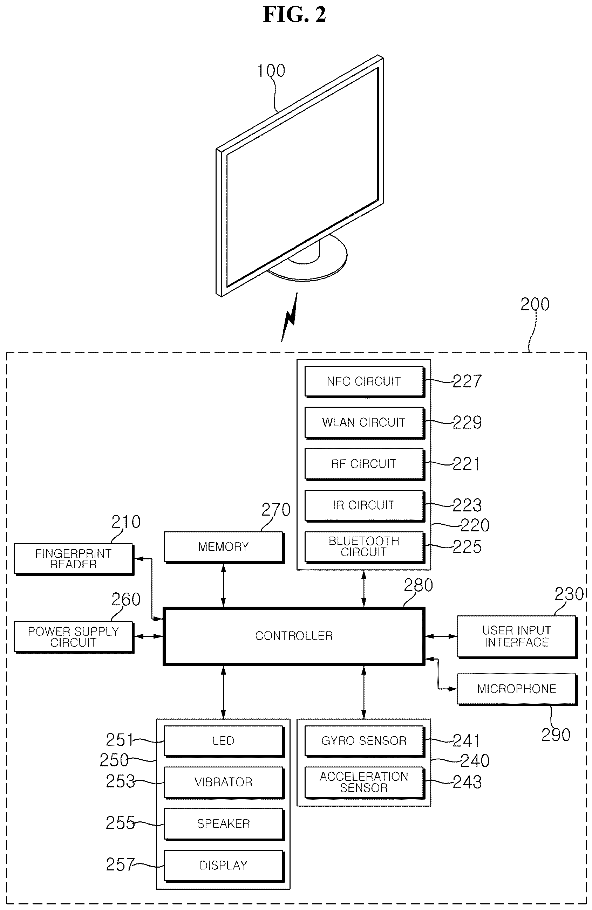

Next, a remote control device according to an embodiment of the present disclosure will be described with reference to FIGS. 2 to 3.

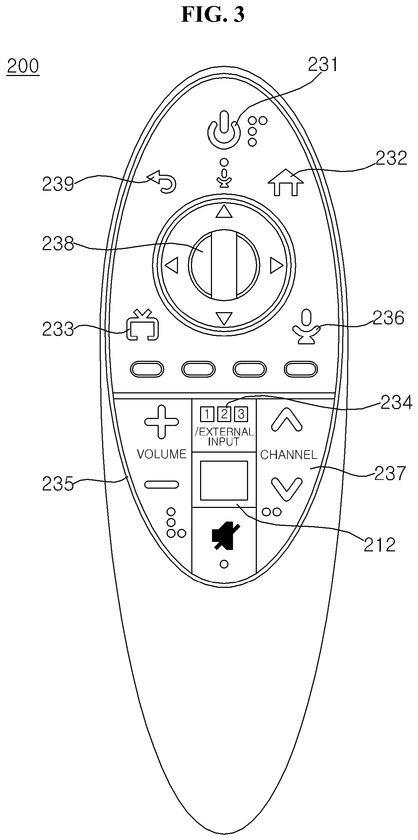

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication unit 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication unit 225.

Also, the microphone 290 of the remote control device 200 may obtain a speech.

A plurality of microphones 290 may be provided.

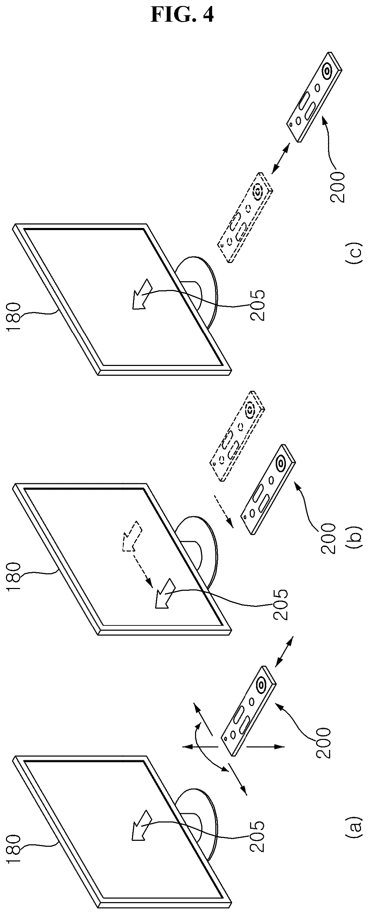

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

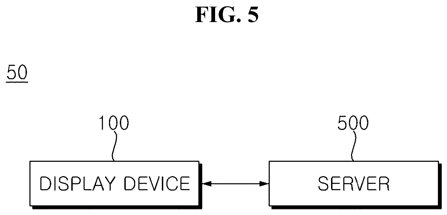

FIG. 5 is a drawing for explaining the configuration of a system according to one embodiment of the present disclosure.

Referring to FIG. 5, the system 50 may include a display device 100 and a server 500.

The display device 100 may extract music from audio being played along with video content using a voice analysis model, and transmit at least a portion of the extracted music to the server 500.

The server 500 may obtain matching music information from a database using at least a portion of the received music. The server 500 may transmit the obtained music information to the display device 100.

The server 500 may be referred to as a cloud server.

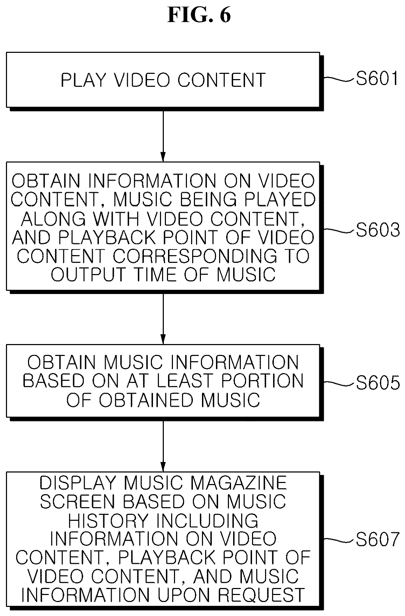

FIG. 6 is a flowchart illustrating a method of operating a display device according to an embodiment of the present disclosure.

Referring to FIG. 6, the controller 170 of the display device 100 may play video content on the display 180 (S601).

In one embodiment, the video content may be a video received from a broadcasting station server via a tuner 131, a video received from an external server via a network interface 133, a video received from an external device via an external device interface 135, or a video received from an external terminal via a wireless communication interface 173.

The controller 170 may obtain information on the video content, a music being played along with the video content, and a playback point of the video content corresponding to an output time of the music (S603).

Information of the video content being played may include at least one of a title of the video content, a channel of the video content, or a broadcast time of the video content. The controller 170 may obtain information of the video content from an electronic program guide or metadata received together with the video content.

The music of the video content may be a music corresponding to the video content and may be audio that is played along with the video content.

The controller 170 may extract music from audio being played along with the video content. The audio being played along with the video content may include at least one of a voice spoken by a character, an object voice according to a movement of an object, and music representing background music.

In one embodiment, the controller 170 may automatically extract music using a subtitle displayed together with the video content. The controller 170 may determine whether the music is currently being played using a closed caption (CC) displayed together with the video content, and if it is determined that music is currently being played, the controller 170 may extract the corresponding music. If the closed caption includes a musical note or a text indicating that music is being played, the controller 170 may determine that music is currently being played.

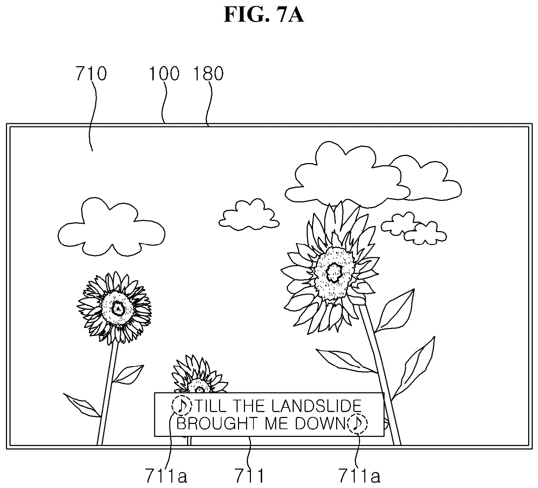

FIGS. 7A to 7C are drawings explaining a process of determining whether music is played using subtitle output together with video content according to an embodiment of the present disclosure.

Referring to FIG. 7A, the display device 100 is playing back a video content 710 and a subtitle 711. If the subtitle 711 include a musical note 711a, the display device 100 may determine that music is being played back and may store the music being played back in a buffer of the memory 140.

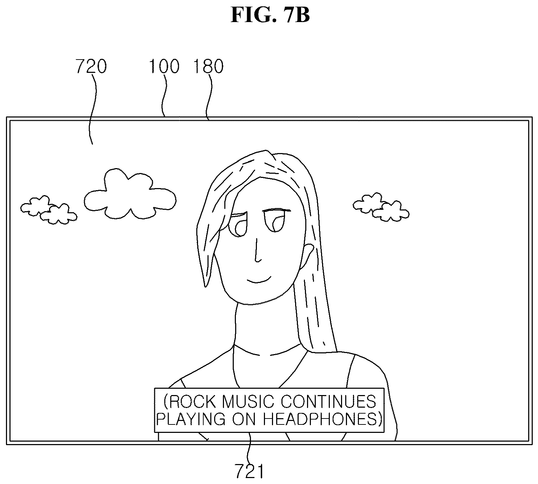

Referring to FIG. 7B, the display device 100 is playing back a video content 720 and a subtitle 721. If the subtitle 721 include a text indicating that music is playing, the display device 100 may determine that music is playing and store the music being played in a buffer of the memory 140.

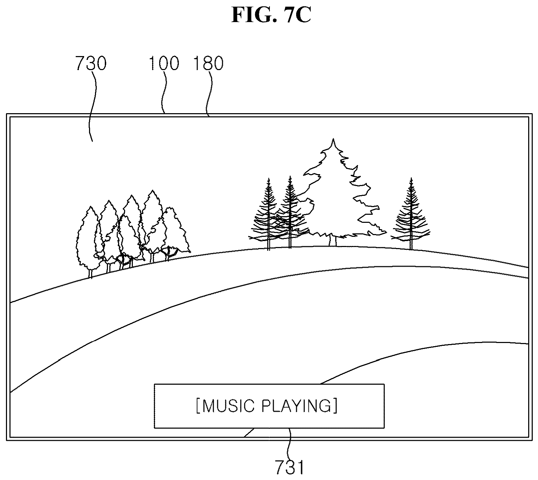

Referring to FIG. 7C, the display device 100 is playing back a video content 730 and a subtitle 731. If the subtitle 731 include a text indicating that music is playing, the display device 100 may determine that the music is playing and store the music being played in a buffer of the memory 140.

Again, FIG. 6 is explained.

In another embodiment, the controller 170 may extract music from audio being played along with video content using a voice analysis model stored in the memory 140. The voice analysis model may be a model that extracts music by separating a character's voice and a noise from the audio.

The voice analysis model may be a model based on an artificial neural network that learns a spectrogram corresponding to audio and a pattern corresponding to a specific sound source (voice, noise, music). The spectrogram may be a tool that converts an audio signal into a time-frequency domain. The controller 170 may convert audio into the spectrogram and input the converted spectrogram into the voice analysis model. The voice analysis model may extract music by separating a character's voice and noise from the spectrogram.

The display device 100 may further include a voice analysis chip for executing a voice analysis model. The voice analysis chip may be included in the controller 170 or provided separately from the controller 170.

In another embodiment, the controller 170 may extract music from the audio of the video content upon receiving a user command. The user command may be a command for selecting a specific button provided on the remote control device 200 or a user's voice command. The user's voice command may be a command such as <Search for background music that is playing now>. The controller 170 may obtain the audio of the video content from the time of receiving the user command, and may extract a music from the obtained audio using the voice analysis model.

Even if the music is extracted from audio using the subtitle, the audio may contain a voices or noise other than the music. In this case, the controller 170 may extract the music from the audio using the voice analysis model.

Meanwhile, the controller 170 may extract a playback point of the video content corresponding to an output time of the music. The controller 170 may extract the playback point of the video content corresponding to a start time of the music playback. The output time of the music may be referred to as an output start time of the music or a playback start time.

The controller 170 may store information on the video content, the music being output together with the video content, and the output time of the music in the memory 140.

Meanwhile, the controller 170 may not store in the memory 140 information about the video content, the music being output together with the video content, and the output time of the music if a playback section of the obtained music is less than a certain playback section, if it is advertisement music inserted in a middle of the video content, or if it is music extracted during a channel search process. This is because it may not be a meaningful music experience for searching and recording music information.

The controller 170 may obtain music information based on at least a portion of the obtained music (S605).

In one embodiment, the controller 170 may transmit at least a portion of the music to the server 500 via the network interface 133. The server 500 may extract music information based on at least a portion of the music and transmit the extracted music information to the display device 100.

The music information may include at least one of a source providing the music, a singer, a title of the music, an album title, an album image, a composer of the music, or a lyricist of the music.

The server 500 may extract audio feature information from at least a portion of music. The audio feature information may include at least one of a spectrogram or a Mel Frequency Cepstrum Coefficient (MFCC). The server 500 may convert the audio extraction information into an audio fingerprint. The server 500 may obtain the music information matched to the audio fingerprint by comparing the converted audio fingerprint with an audio fingerprint matched to music information stored in the database.

In one embodiment, the controller 170 may receive a code corresponding to music information from the server 500 through the network interface 133 and store the received code in the memory 140. The server 500 may generate a code matching the music information and store the generated code in a database by matching it with the music information. The server 500 may transmit the code to the display device 100. The code is for identifying the music information and may have various forms.

The controller 170 may transmit the code stored in the memory 140 to the server 500 in response to an execution request of a music magazine application, and may receive the music information matching the code from the server 500.

In another embodiment, the controller 170 may receive and store music history in advance in the memory 140, and then display a music magazine screen based on the stored music history on the display 180 in response to a request for execution of the music magazine application.

When the music information is acquired, the controller 170 may display a notification indicating that music information has been acquired on the display 180.

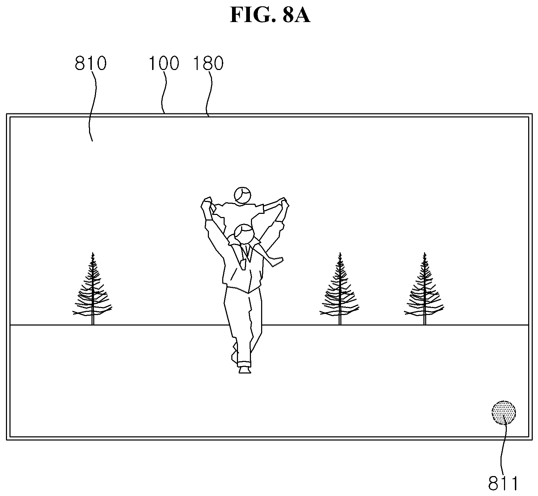

FIGS. 8A to 8F are diagrams illustrating examples of providing a notification indicating that music information is being searched or that music information has been acquired according to an embodiment of the present disclosure.

Referring to FIG. 8A, the display device 100 may display a search notification 811 on the display 180 indicating that the music information is being searched based on at least a portion of the music extracted while playing the video content 810 at a first playback point. The search notification 811 may be displayed at a lower left corner corresponding a location that does not interfere with viewing of the video content 810.

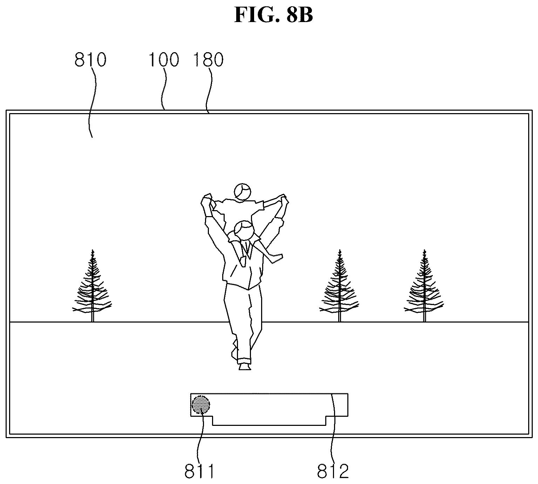

As another example, the search notification 811 may be displayed overlapping the location where a subtitle 812 is displayed, as illustrated in FIG. 8B.

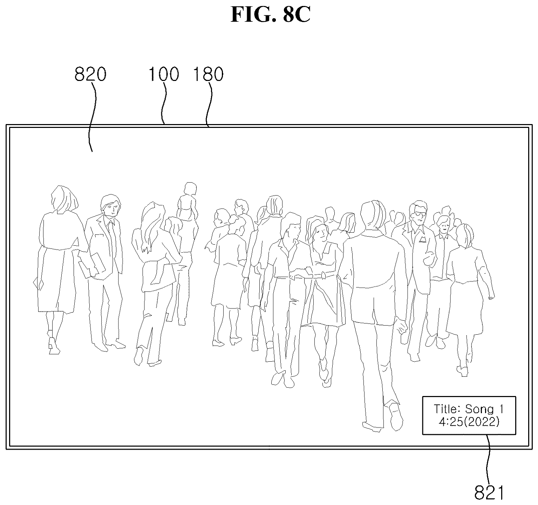

When the search for the music information of the music is completed while the display device 100 is playing a video content 820 of a second playback point after the first playback point, the display device 100 may display a search result notification 821 indicating that the music information has been searched on the display 180, as shown in FIG. 8C. The search result notification 821 may include music information including at least one of a title of the music, a total playback length of the music, or a release year of the music.

The search result notification 821 may be displayed when the music information is searched during playback of video content 820 and music is still playing.

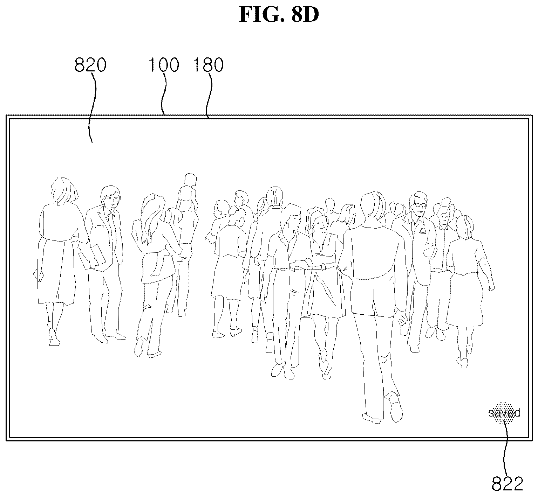

In another embodiment, the display device 100 may display a search success notification 822 on the display 180 indicating that the search for music information was successful, as illustrated in FIG. 8D. The search success notification 822 may also indicate that the searched music information was stored in the memory 140.

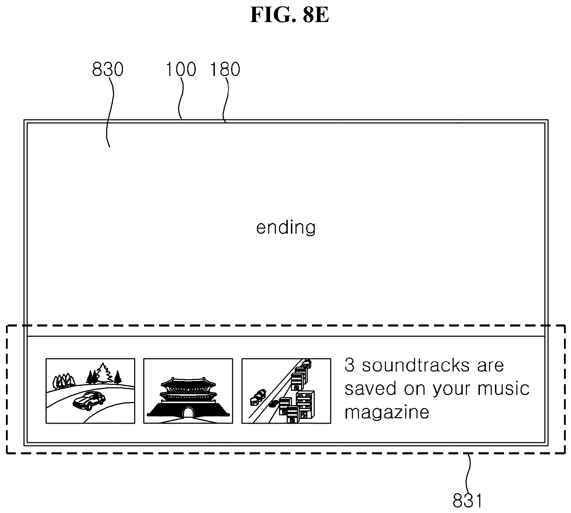

Referring to FIG. 8E, the display device 100 is playing back a video content 830 at a third playback point indicating an end point. The display device 100 may display a music information summary notification 831 including music information corresponding to music extracted during playback of a video content 830 on the display 180. The music information summary notification 831 may include the number of searched musics, album jackets (or album images) of the searched musics, and titles of the searched musics.

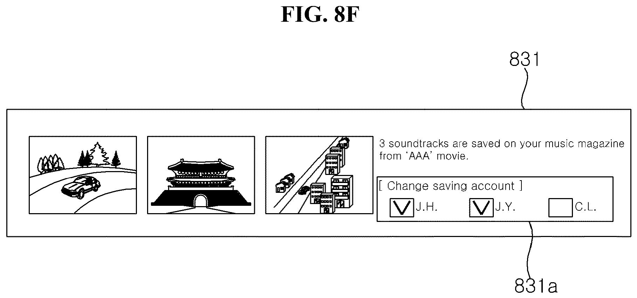

Referring to FIG. 8F, the music information summary notification 831 may include an account change item 831a for changing a user account that is a storage target of music information corresponding to music extracted during playback of content 830. A user account logged into the display device 100 is checked, and the user may add or change a storage account of music information through a check box.

Again, FIG. 6 is explained.

The controller 170 may display a music magazine screen based on a music history including information on video content, playback point of the video content, and music information on the display 180 upon request (S607).

The music magazine screen may be a screen for browsing information on the video content and the music information on the music included in the video content. The music magazine screen may be a screen displayed in response to a request for execution of the music magazine application installed on a display device 100.

The music magazine screen may be a screen for providing music information corresponding to each of a plurality of musics played together with video content according to a user's viewing schedule (or a time order).

In one embodiment, the controller 170 may display a music magazine screen on the display 180 in response to receiving a command to select a specific button provided on the remote control device 200.

In another embodiment, the controller 170 may display a music magazine screen on the display 180 in response to receiving a command to select a music magazine icon included on the home screen.

In another embodiment, the controller 170 may display the music magazine screen on the display 180 in response to receiving a voice command to expose the music magazine screen.

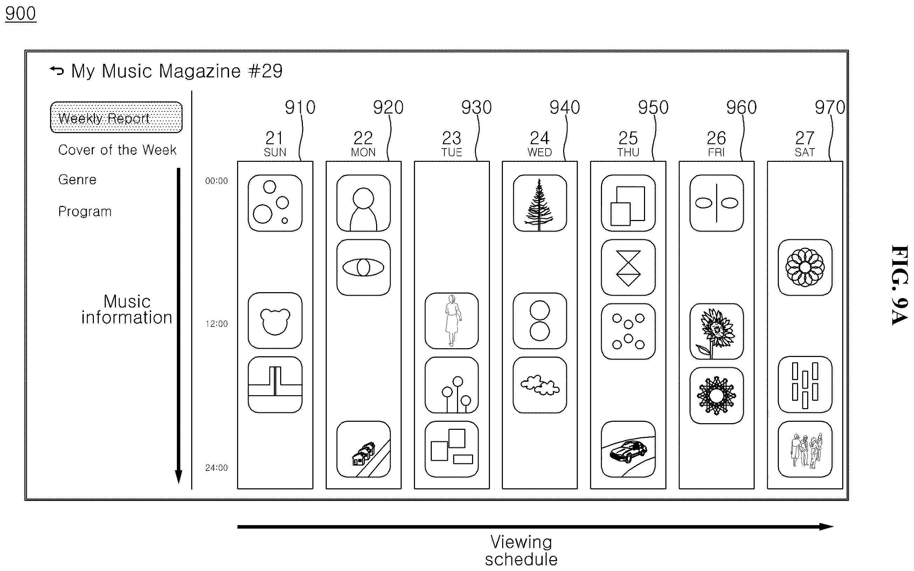

FIGS. 9A to 9F are drawings illustrating a music magazine screen according to an embodiment of the present disclosure.

Referring to FIG. 9A, the display device 100 may display a music magazine screen 900 for browsing viewing information of video content or music information about music played together with the video content on the display 180.

The music magazine screen 900 may include music information according to the viewing schedule. A time axis of the music magazine screen 900 is an axis that displays music information about music played together with the video content watched by the user, and may have a one-week section, but this is only an example and may vary depending on the user's settings.

As a scale of the time axis of the music magazine screen 900 changes, the music information may also be rearranged.

The music magazine screen 900 may include first to seventh music history items 910 to 970 that provide viewing information on video content viewed by the user over the course of a week and information on music played with the video content.

Each music history item may include music items corresponding to the music recorded on that date. Each music item may be a button to provide music that was played at the playback point of the video content.

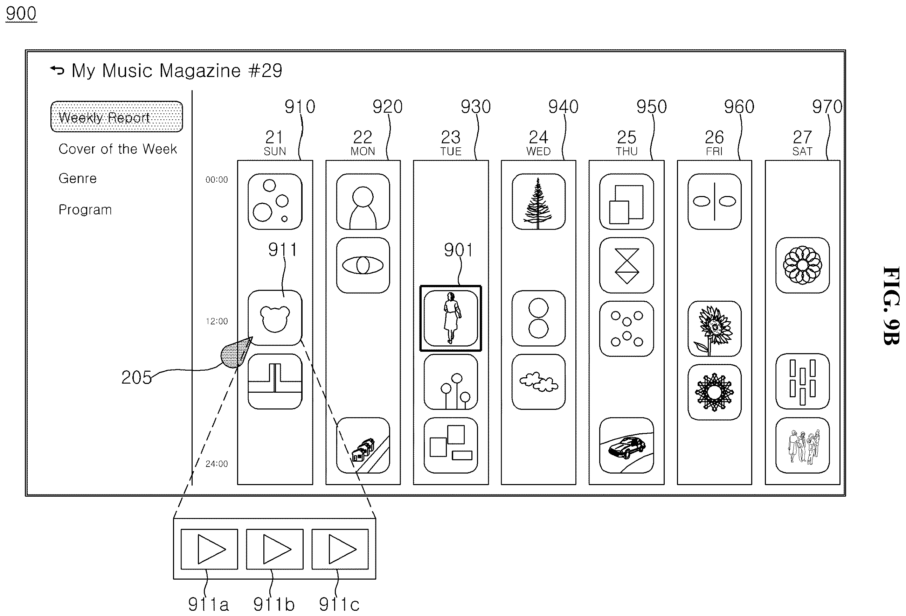

Referring to FIG. 9B, the display device 100 may display a music play button 911a, a music video play button 911b, and a video content play button 911c when the pointer 205 controlled by the movement of the remote control device 200 or a highlight box 901 that is moved according to a direction button provided on the remote control device 200 is located (hovered) on a music item 911.

The music play button 911a may be a button for playing music corresponding to the music item 911.

The music video play button 911b may be a button for playing a music video of music corresponding to the music item 911.

The video content playback button 911c may be a button for playing the video content played together with music corresponding to the music item 911. In particular, the video content playback button 911c may be a button for playing the video content from a playback point corresponding to a time point when music corresponding to the music item 911 is output.

The display device 100 may display a music play button 911a, a music video play button 911b, and a video content play button 911c while playing a sample of music corresponding to the music item 911 when the pointer 205 or the highlight box 901 is positioned on the music item 911. The music sample may be a part of the music to be played.

When the display device 100 receives a command to select a music item 911 through a pointer 205 or a highlight box 901, it may display a music video playback button 911b and a video content playback button 911c while playing music corresponding to the music item 911.

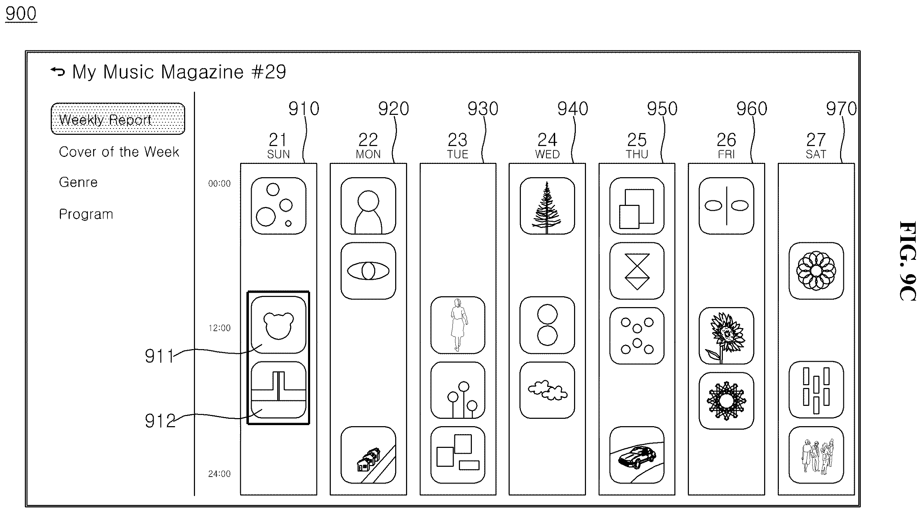

Referring to FIG. 9C, the display device 100 may provide music items 911, 912 corresponding to stored music while playing the same video content as one group. The grouped music items 911, 912 may be identified by an indicator indicating that they are grouped.

The display device 100 may also display a title of the video content on one side of the music items 911, 912.

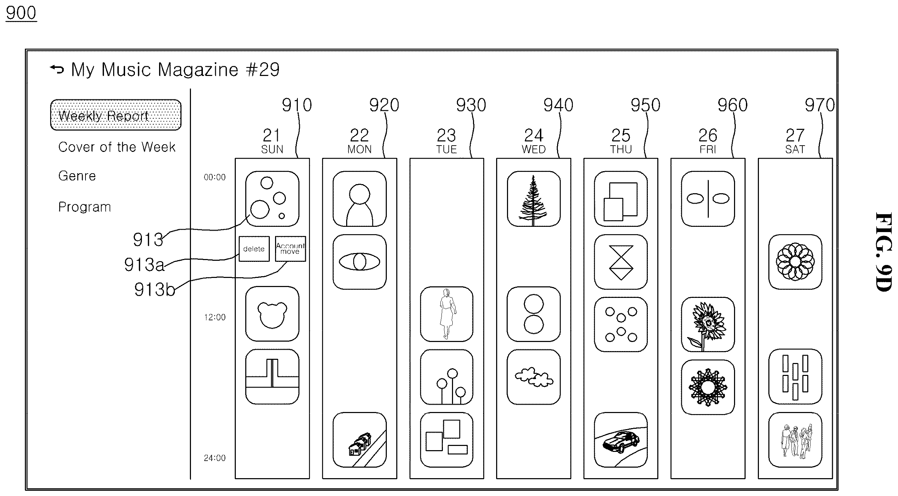

Referring to FIG. 9D, the display device 100 may display a delete button 913a and an account transfer button 913b on one side of a music item 913.

The delete button 913a may be a button for deleting the music item 913.

The account transfer button 913b may be a button for moving the music item 913 to another user account.

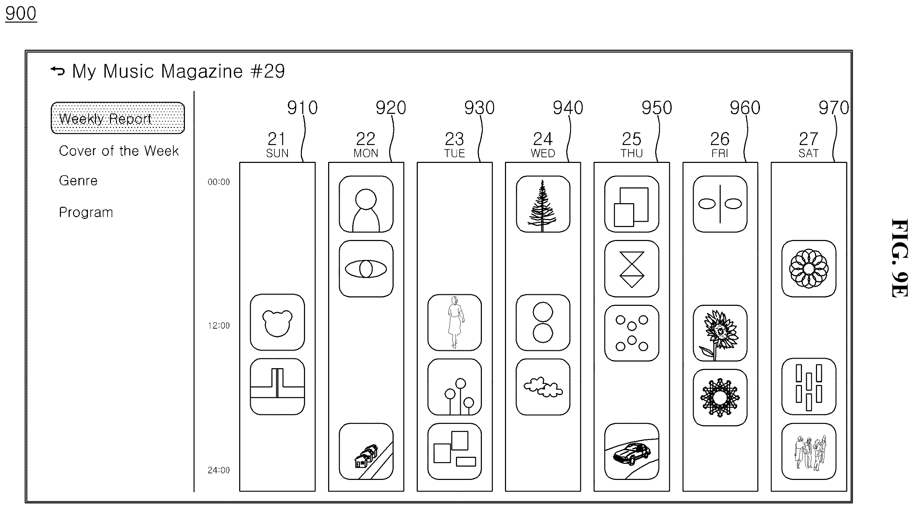

The display device 100 may remove the music item 913 on the music magazine screen 900 as shown in FIG. 9E upon receiving a command to select the delete button 913a.

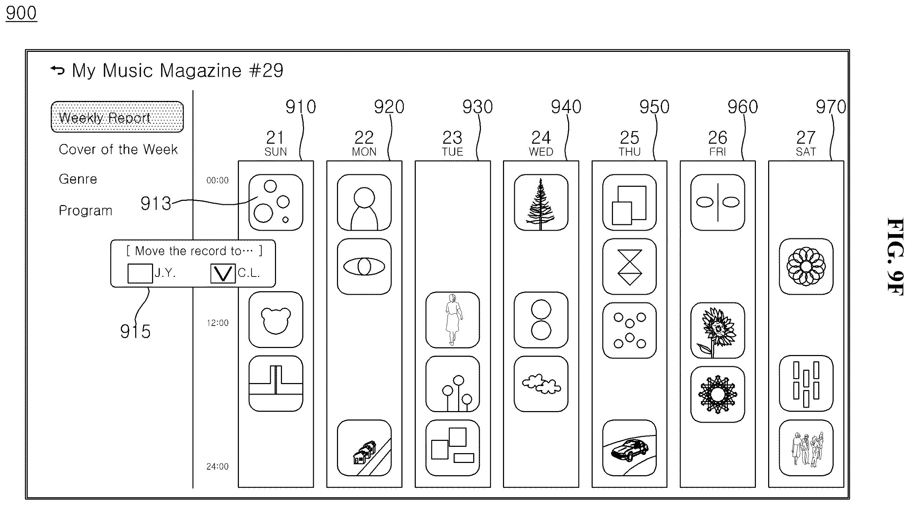

When the display device 100 receives a command to select the account transfer button 913b, the display device 100 may display an account transfer pop-up window 915 for saving the music item 913 to another user account, as illustrated in FIG. 9F. The account transfer pop-up window 915 may not include a user account currently logged into the display device 100, but may include remaining accounts registered in the display device 100. The user may add or deselect a storage account for the music item 913 through a check box.

In this way, according to the embodiment of the present disclosure, a user may easily access video content and music viewed in the past through athe music magazine screen. In addition, the user may intuitively check video content and music viewed in the past without a separate search process, thereby enjoying an improved user experience.

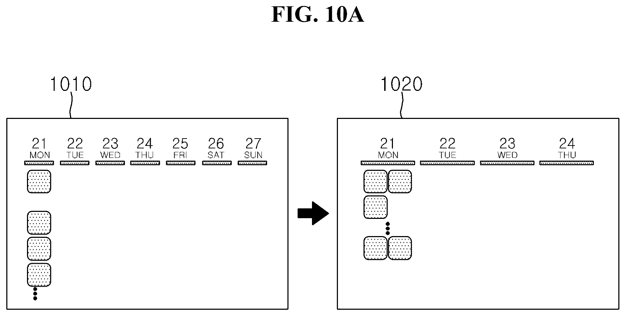

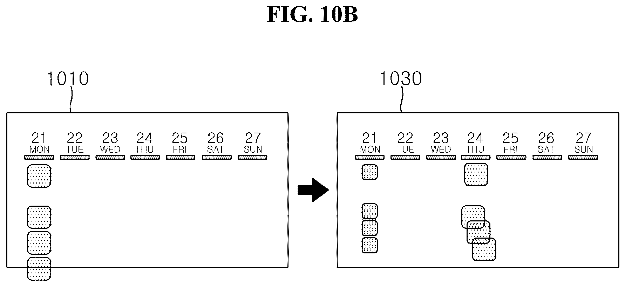

FIGS. 10A and 10B are drawings illustrating changes in the layout of a music magazine screen according to an embodiment of the present disclosure.

Referring to FIG. 10a, a first music magazine screen 1010 is illustrated providing music history items for a week.

The display device 100 may automatically change the scale of the time axis when the number of multiple music items included in the first music magazine screen 1010 is a certain number or more. For example, when the number of multiple music items included in the first music magazine screen 1010 is the certain number or more, the display device 100 may change the first music magazine screen 1010 having a one-week scale to a second music magazine screen 1020 having a four-day scale.

Referring to FIG. 10B, the first music magazine screen 1010 is illustrated providing music history items for a week.

When the number of multiple music items included in the first music magazine screen 1010 is greater than a certain number, the display device 100 may reduce the size of the music items included in each music history item or display the music items included in each music history item by overlapping them.

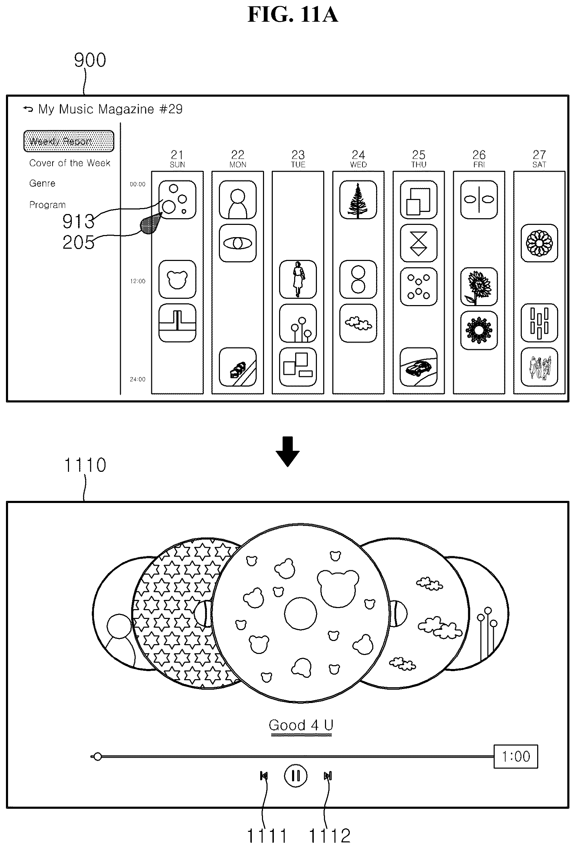

FIGS. 11A to 11E are diagrams illustrating scenarios related to the playback of music corresponding to music items included on a music magazine screen according to an embodiment of the present disclosure.

Referring to FIG. 11A, the display device 100 may display an audio playback player screen 1110 on the display 180 when a pointer 205 is hovered over a music item 913 or when a command to select a music item 913 via the pointer 205 is received.

The audio playback player screen 1110 may include music information corresponding to a music item 913 and buttons for controlling playback of the music. The audio playback player screen 1110 may include a previous movement button 1111 for playing a previous music displayed on the music magazine screen 900 and a next movement button 1112 for playing a next music.

The display device 100 may play music stored before the playback point of the video content corresponding to the music item 913 according to a command for selecting the previous movement button 1111. The display device 100 may play music stored after the playback point of the video content corresponding to the music item 913 according to a command for selecting the next movement button 1112.

In one embodiment, the display device 100 may only provide a preview of music corresponding to the music item 913 if the logged-in user account has not subscribed to a streaming music application that provides a streaming music service. That is, only one minute of the entire playback section of the music may be played.

The display device 100 may play the entire playback section of music corresponding to the music item 913 if the logged-in user account is subscribed to the streaming music application.

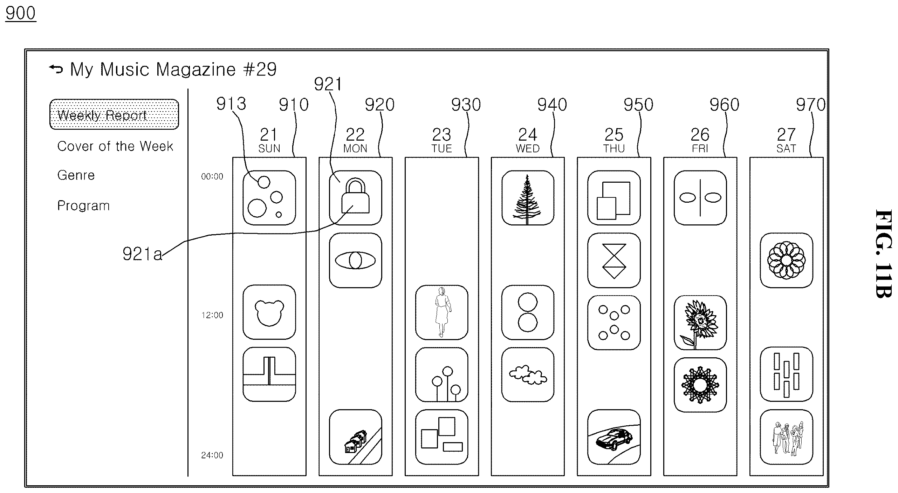

Referring to FIG. 11B, the display device 100 may distinguish and display a music for which a preview service is available when not subscribing to the streaming music application and a music for which a preview service is available only when subscribing to the streaming music application.

For example, a lock icon 921a may be displayed on the music item 921 to indicate that the preview service is available only when the streaming music application is subscribed to.

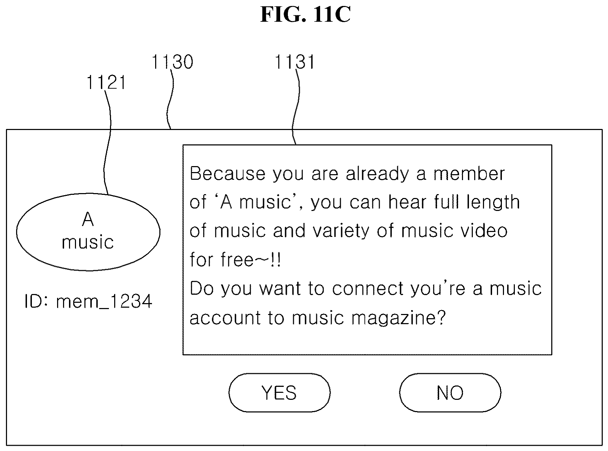

When the display device 100 receives a command to select the music item 913, it may display an existing subscription company confirmation window 1130 on the display 180, as illustrated in FIG. 11C. The existing subscription company confirmation window 1130 may include a streaming one app icon 1121 corresponding to the streaming music application subscribed to by a user account logged into the display device 100, and a guide text 1131 inquiring about whether to link the playback of music included in the music magazine screen 900 through the subscribed streaming music application. That is, the user may perform an operation for the first link with the existing subscribed streaming music application.

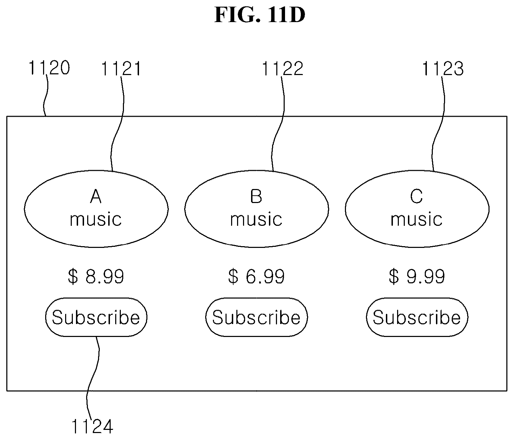

When the display device 100 receives a command to select a music item 921 while subscribing to the streaming music application but not supporting the music or not subscribing to the streaming music application, the display device 100 may display a paid music service subscription inducing window 1120 as shown in FIG. 11D.

The paid music service subscription inducement window 1120 may include a plurality of streaming music app icons 1121, 1122, 1123 corresponding to each of a plurality of streaming music applications that provide streaming music services for a fee, a one-month usage price for each streaming music app, and a subscription button 1124.

The user may subscribe to a desired streaming music application through the paid music service subscription induction window 1120 and listen to music corresponding to the music items included on the music magazine screen 900.

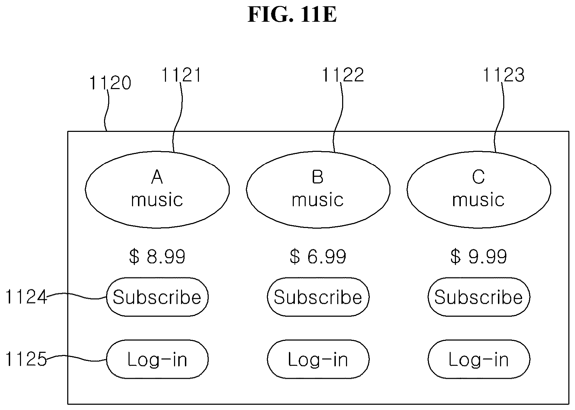

The paid music service subscription induction window 1120 may further include a login button 1125, as shown in FIG. 11E. The user may directly determine whether to subscribe to or log in to the streaming music service and connect the user account to the corresponding streaming music service.

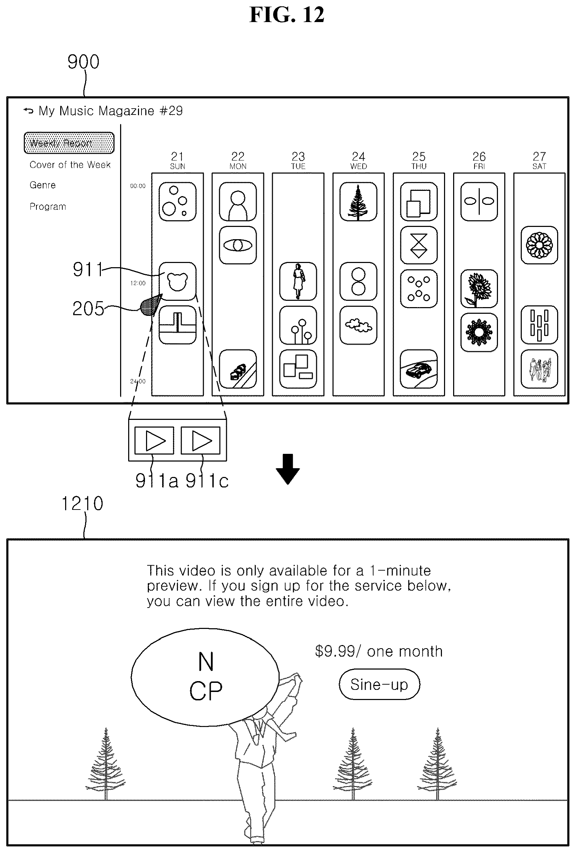

FIG. 12 is a diagram illustrating a process for inducing subscription to a streaming video service for playing video content when a command for playing video content is received through a music magazine screen according to one embodiment of the present disclosure.

The display device 100 may display the music play button 911a and the video content play button 911c on the display 180 when the pointer 205 hovers over the music item 911 included in the music magazine screen 900.

The display device 100 receives a command to select a video content playback button 911c, and if a user account logged into the display device 100 is not subscribed to the streaming video service for playback of the video content, a streaming video service subscription inducing window 1210 may be displayed on the display 180.

The streaming video service subscription inducement window 1210 may include one or more streaming video application apps corresponding to one or more streaming video applications providing streaming video services, and a monthly subscription fee for each streaming video application.

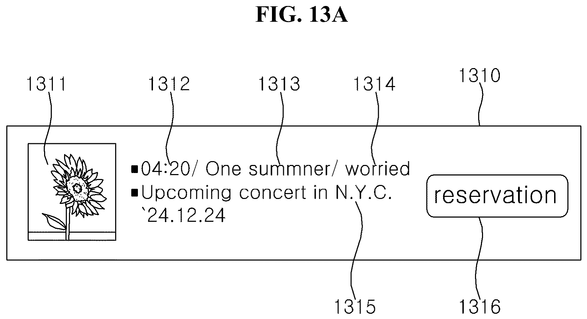

FIGS. 13A to 13C are drawings explaining examples of displaying related products together using music information within video content viewed by a user.

Referring to FIG. 13A, when music being played along with video content is searched, the display device 100 may display a first music-related product notification 1310 including music information and related concert information on the display 180.

The first music-related product notification 1310 may include an album image 1311 of the searched music, a playback point of the video content when the music is output 1312, a singer of the music 1313, a title of the music 1314, concert information 1315 of the singer 1313, and a concert reservation button 1316.

The display device 100 may access a website for concert reservation in response to a command to select a concert reservation button 1316.

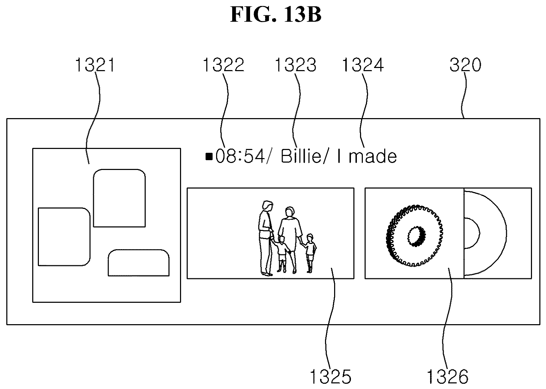

Referring to FIG. 13B, when music being played along with video content is searched, the display device 100 may display a second music-linked product notification 1320 including music information and linked video information on the display 180.

The second music-related product notification 1320 may include an album image 1321 of the searched music, a playback point of the video content when the music is output 1322, a singer of the music 1323, a title of the music 1324, and other video contents 1325, 1326 in which the singer 1323 appears.

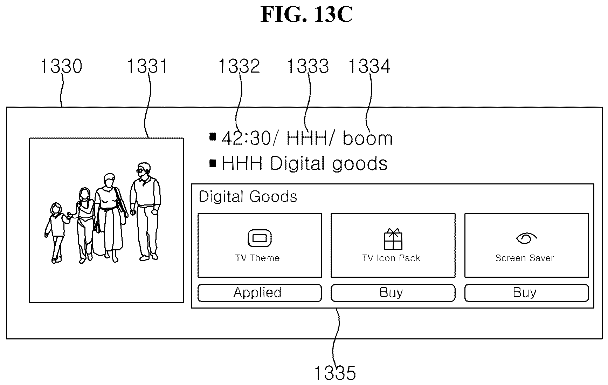

Referring to FIG. 13C, when music being played along with video content is searched, the display device 100 may display a third music-linked product notification 1330 including music information and linked video information on the display 180.

The third music-related product notification 1330 may include an album image 1331 of the searched music, a playback point 1332 of the video content when the music is output, a singer of the music 1333, a title of the music 1334, and a list of paid items 1335 that may decorate the UI of the screen. The list of paid items 1335 may include a theme item that may edit the theme of the screen, an icon item for editing icons on the screen, and a screen saver item for the screen saver.

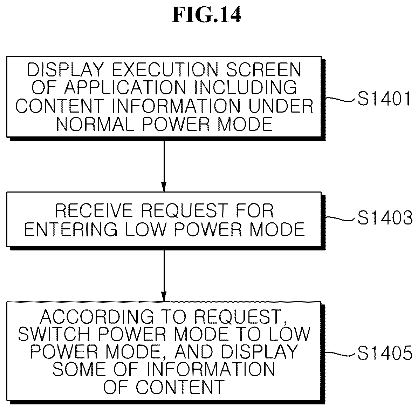

FIG. 14 is a flowchart for a method of operating a display device according to another embodiment of the present disclosure.

The power mode of the display device 100 may include a low power mode and a normal power mode. The normal power mode may be a mode in which power is consumed so that the display device 100 may use all functions. The low power mode may be a mode for minimizing power consumption by operating only some functions of the display device 100. As an example, the low power mode may be a mode in which the display device 100 performs an AOD (Always On Display) function that continuously displays low-capacity information.

The low power mode may be referred to as the AOD mode. The low power mode may be a mode in which all applications installed on the display device 100 are not running, or a mode in which only a very small number of applications are running. The low power mode may be a mode in which low-capacity information is continuously displayed while the display device 100 is powered off.

Referring to FIG. 14, the controller 170 of the display device 100 may display an execution screen of an application including content information on the display 180 under a normal power mode (S1401).

The application may be a music magazine application for providing the music magazine screen, and the information of the content may be information included on the music magazine screen 900 as illustrated in FIG. 9A. Specifically, the information of the content may include a plurality of music items corresponding to a plurality of music items extracted from audio that the user was playing together with the video content.

The application may be an audio playback application for playing the music, and the information of the content may include a music list included in a playlist, music information corresponding to the currently playing the music, and a playback control window for controlling playback of the music.

The controller 170 may receive a request for entering a low power mode (S1403), and according to the received request, switch the power mode of the display device 100 to the low power mode, and display some of the information of the content on the display 180 (S1405).

The request for entering the low power mode may be a power off command received while the display device 100 is powered on and the AOD function is activated.

That is, the controller 170 may recognize the power off command received while the AOD function is activated as the request for entering the low power mode.

The controller 170 may receive the power off command from a remote control device 200 or the power off command via a user's voice command.

In one embodiment, the controller 170 may display music information corresponding to the currently playing the music among the entire information of the content being displayed on the display 180 as the power mode of the display device 100 is switched to the low power mode.

In another embodiment, when the information of the content includes the plurality of music items, the controller 170 may display music information corresponding to a music item set as a top priority favorite by the user among the plurality of music items on the display 180 as the power mode of the display device 100 is switched to the low power mode.

In another embodiment, when the information of the content includes the plurality of music items, the controller 170 may display music information corresponding to the music most recently played by the user or music set by the user among the plurality of music items on the display 180 as the power mode of the display device 100 is switched to the low power mode.

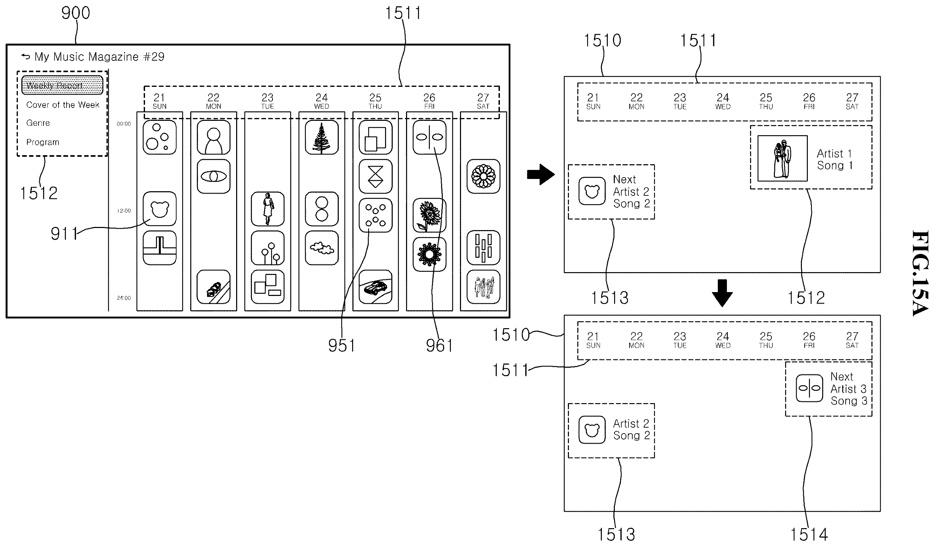

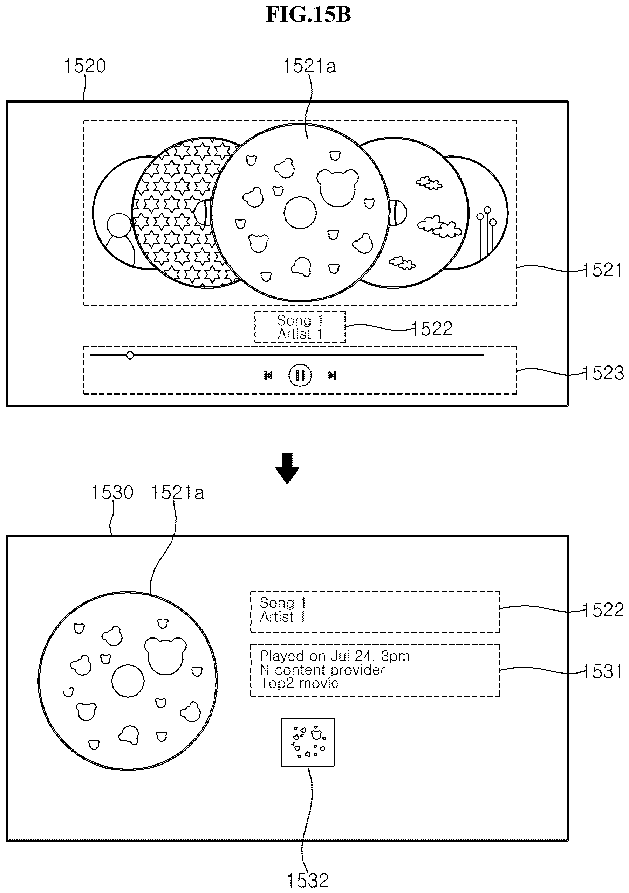

FIG. 15A and FIG. 15B are diagrams explaining how displayed information changes as the power mode of the display device switches from a normal power mode to a low power mode.

Referring to FIG. 15A, the display device 100 may display the music magazine screen 900 on the display 180 under a normal power mode.

The music magazine screen 900 may further include schedule information 1511 including multiple dates in addition to multiple music items corresponding to each date, and menu information 1512 of the music magazine application. At least a portion of music information corresponding to the music item may be displayed on each music item. The music information may include an album image of the music, a singer, and a title of the music.

It is assumed that the display device 100 is playing the music corresponding to one of the multiple music items 951.

The display device 100 may switch the music magazine screen 900 to a first AOD screen 1510 in response to receiving a request to enter the low power mode.

The first AOD screen 1510 may be a screen displayed in low power mode or when the AOD function is activated.

The first AOD screen 1510 may include only schedule information 1511 and music information 1512 corresponding to the music item 951 of the currently playing music among the information included in the music magazine screen 900. The music information 1512 may include the album image, a singer, and a title of the music corresponding to the music item 951.

That is, the display device 100 may display only a portion of the entire information included in the music magazine screen 900 under the low power mode.

Meanwhile, the viewing date (25, THU) of the currently playing music may be identified among the schedule information 1511 included in the first AOD screen *1510.*

The first AOD screen 1510 may further display music information 1513 of a music item 911 corresponding to the next music to be played. The music information 1513 may include an album image, a singer, and a title of the music corresponding to the music item 911. The size of the area occupied by the music information 1512 corresponding to the currently playing music may be larger than the size of the area occupied by the music information 1513 corresponding to the next music to be played.

When the next music is played under the low power mode, the display device 100 may make the music information 1512 disappear from the first AOD screen 1510 and increase the size of the area occupied by the music information 1513 corresponding to the newly played music. At the same time, the viewing date (21, SUN) of the newly played music may be identified among the schedule information 1511 included in the first AOD screen 1510.

The first AOD screen 1510 may further display music information 1513 of a music item 961 corresponding to the next music to be played. The music information 1513 may include an album image, a singer, and a title of the music corresponding to the music item 961. The size of the area occupied by the music information 1513 corresponding to the newly played music may be larger than the size of the area occupied by the music information 1514 corresponding to the next music to be played.

Referring to FIG. 15B, the display device 100 may display an audio playback player screen 1520 for playing music corresponding to a music item included in the music magazine screen 900 on the display 180 under the normal power mode. The audio playback player screen 1520 may be an execution screen of an audio playback application.

The display device 100 may display a music play button when the pointer 205 hovers over a music item included in the music magazine screen 900, and may execute the audio playback application upon receiving a command to select the music play button.

The audio playback player screen 1520 may include an album image list 1521 including album images for each of a plurality of music items, music information 1522 corresponding to the currently playing music, and a playback control window 1523 for controlling playback of the music. The album image list 1521 may include an album image 1521a of the currently playing music.

The display device 100 may switch the audio playback player screen 1520 to a second AOD screen 1530 upon receiving a request to enter the low power mode.

The second AOD screen 1530 may include only the album image 1521a and music information 1522 of the currently playing music among the information included in the audio playback player screen 1520. That is, the display device 100 may display only a portion of the entire information included in the audio playback player screen 1520 as the power mode is switched from the normal power mode to the low power mode.

The display device 100 may further display viewing information 1531 of video content played along with the music being played and a still image 1532 of the video content on the second AOD screen 1530 in addition to the portion of the entire information included in the audio playback player screen 1520 as the power mode is switched from the normal power mode to the low power mode.

The viewing information 1531 of video content includes the playback point of the video content corresponding to the start time of music output, the name of the video content, and the source of the video content.

Under the low power mode, the display device 100 may display only information including minimal images and text, excluding all dynamic elements and background elements such as the playback control window 1523 that were displayed in the normal power mode.

In this way, according to the embodiment of the present disclosure, only the minimum information may be displayed as the power mode of the display device is switched from the normal power mode to the low power mode. Accordingly, the power consumption of the display device may be reduced, and only the information necessary for the user may be intuitively provided.

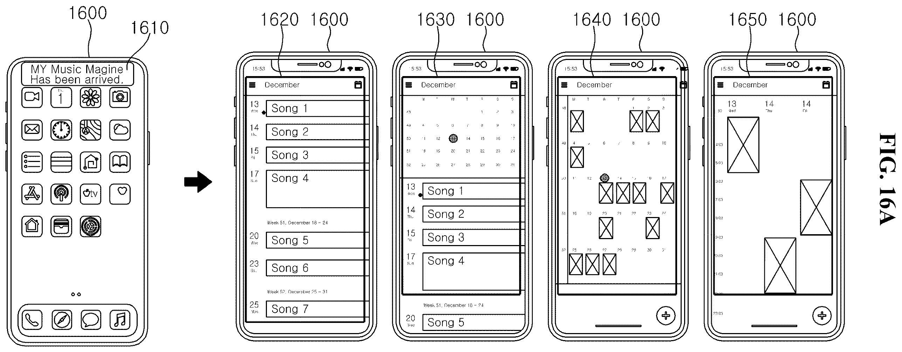

FIGS. 16A to 17E are drawings explaining a scenario of linking a music magazine screen between a display device and a terminal according to an embodiment of the present disclosure.

Each of the display device 100 and a terminal 1600 may have a home appliance management application installed. The home appliance management application may be an application for managing home appliances installed in a home.

Referring to FIG. 16A, the terminal 1600 may receive a notification 1610 indicating that a music magazine has been received through the home appliance management application. The terminal 1600 may display any one of a first to a fourth music magazine screens 1620, 1630, 1640, 1650 depending on an input for selecting the notification 1610.

The first music magazine screen 1620 may be a screen for providing multiple music items that were listened to while watching video content in the past in a daily format, the second music magazine screen 1630 may be a screen for providing multiple music items in a weekly format, the third music magazine screen 1640 may be a screen for providing multiple music items in a monthly format, and the fourth music magazine screen 1650 may be a screen for providing multiple music items in an hourly format.

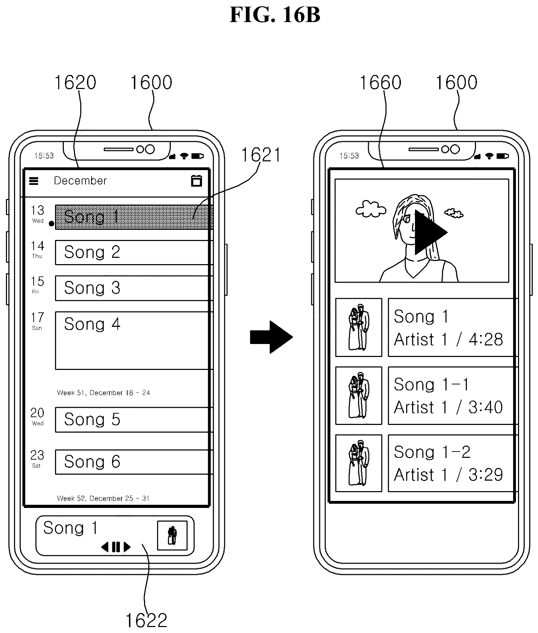

Referring to FIG. 16B, when a music item 1621 is selected on the first music magazine screen 1620, the terminal 1600 may play music corresponding to the selected music item 1621. The terminal 1600 may display a play window 1622 for playing the corresponding music. When the music item 1621 corresponding to the music being played is re-selected in this state, the terminal 1600 may browse detailed information 1660 of the music being played.

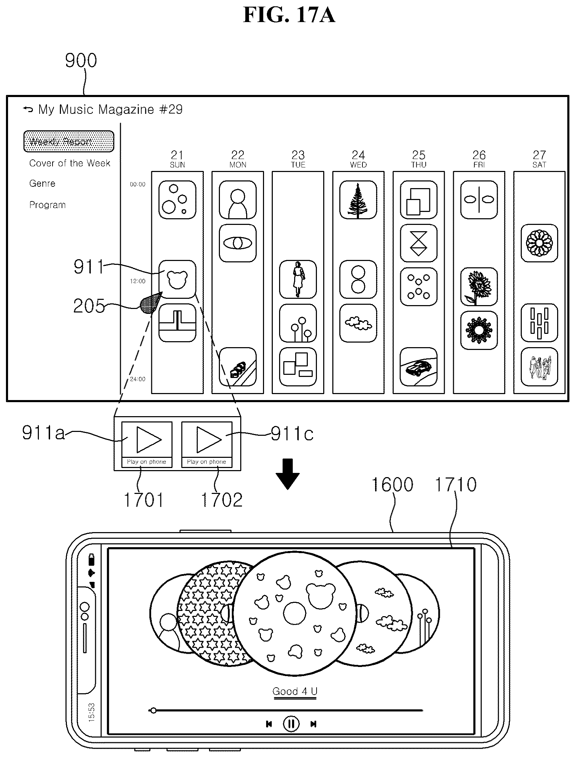

Referring to FIG. 17A, when the music item 911 included in a music magazine screen 900 is hovered over via the pointer 205, the display device 100 may display a music play button 911a, a video content play button 911c, a terminal music play button 1701 for playing music corresponding to the music item 911 via the terminal 1600, and a terminal video play button 1702 for playing video content via the terminal 1600.

When the display device 100 receives a command to select a terminal music playback button 1701, it may transmit a request to play music corresponding to a music item 911 to the terminal 1600 via the wireless communication interface 173. Upon receiving the request to play music, the terminal 1600 may play the corresponding music. The terminal 1600 may display an audio playback player screen 1710 that plays the corresponding music.

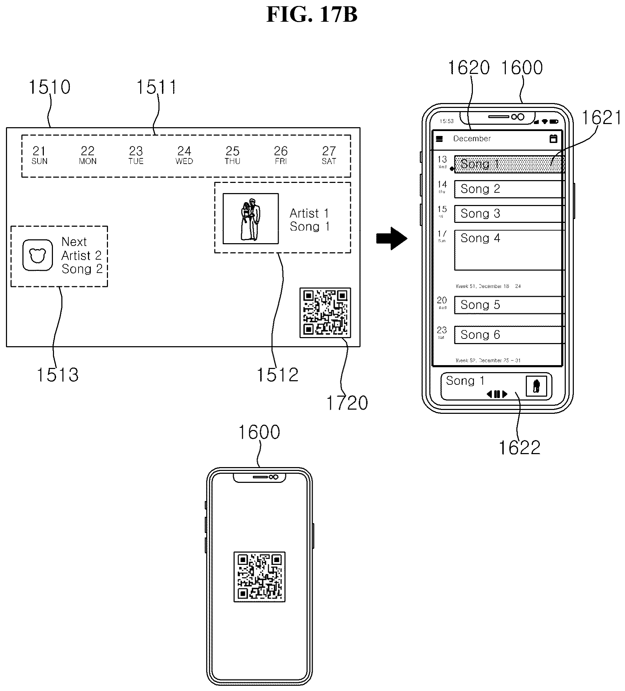

Referring to FIG. 17B, the display device 100 is displaying a first AOD screen 1510 under the low power mode. The first AOD screen 1510 may further include a QR code 1720 in addition to schedule information 1511 and music information 1512, 1513.

The QR code 1720 may be a code for providing a music magazine service to the terminal 1600. The music magazine service may be a service that provides the music magazine screen that records information about the music being played along with video content over time.

The QR code 1720 may be a code that guides access to an installation path of a music magazine application that provides a music magazine service.

The QR code 1720 may be a code for providing the music magazine screen. The terminal 1600 may display the first music magazine screen 1620 by photographing the QR code 1720.

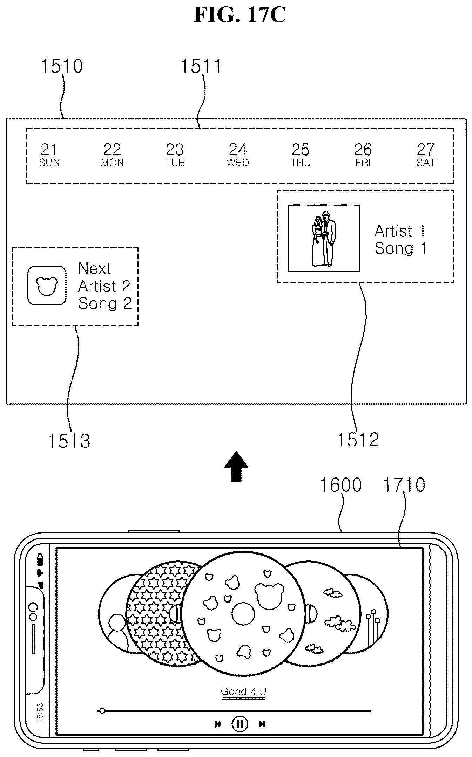

Referring to FIG. 17C, the display device 100 is displaying the first AOD screen 1510 under the low power mode, and the terminal 1600 is displaying the audio playback player screen 1710.

The display device 100 may receive a control signal for controlling music playback from the terminal 1600 via the wireless communication interface 173. The terminal 1600 may generate a control signal for controlling music playback upon receiving a user input through a playback control window of the audio playback player screen 1710 and transmit the generated control signal to the display device 100.

The display device 100 may control the playback of music according to the received control signal. The control signal may be a signal for controlling any one of stopping music playback, playing the previous music, and playing the next music.

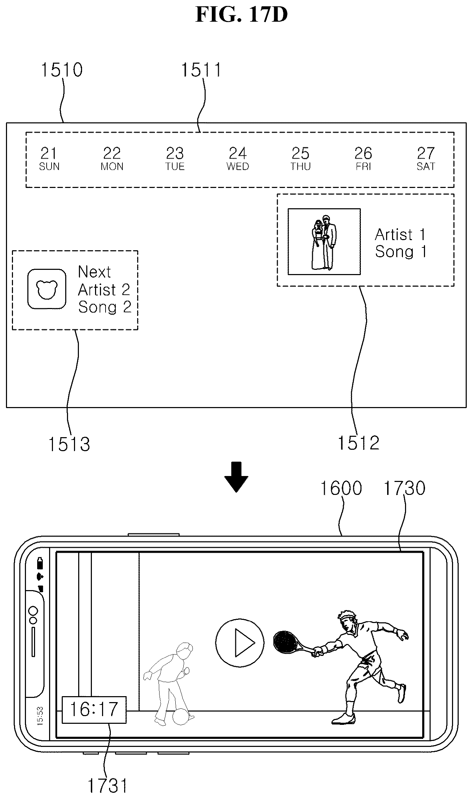

Referring to FIG. 17D, the display device 100 is playing music corresponding to the music item 1512 while displaying the first AOD screen *1510* under the low power mode.

When music corresponding to the music item 1512 is played under the low power mode, the display device 100 may transmit a video playback request to the terminal 1600 to play video content from a playback point corresponding to the start time of music output through the wireless communication interface 173. The video playback request may include an access address of the video content and the playback point of the video content.

The terminal 1600 may play video content 1730 from a playback point 1731 corresponding to the start time of music output according to a video playback request received from the display device 100.

The display device 100 may control the speaker 185 to reduce the volume when the video content displayed by the terminal 1600 is other video content that was not played along with the music being played. This is because the user may have a need to listen to music through the display device 100 while watching other video content through the terminal 1600.

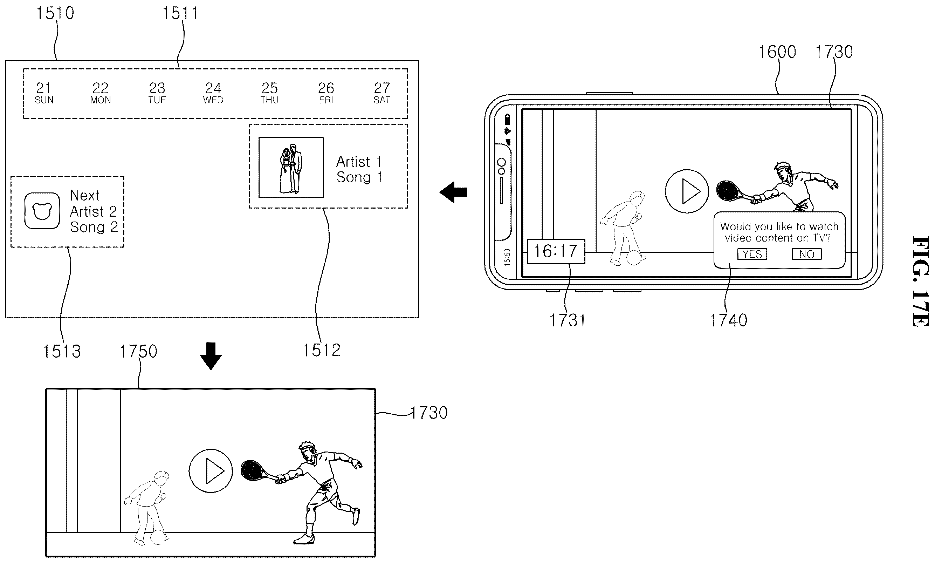

Referring to FIG. 17E, the display device 100 may be playing music corresponding to the music item 1512 while displaying the first AOD screen 1510 under the low power mode, and the terminal 1600 may be playing video content 1730. The terminal 1600 may display a pop-up window 1740 asking whether to switch viewing of the video content 1730 to the display device 100. If the terminal 1600 receives an acceptance input through the pop-up window 1740, the terminal 1600 may request the display device 100 to play the video content.

The display device 100 may turn on the power according to the request received from the terminal 1600, switch the power mode to the normal power mode, and switch the first AOD screen *1510* to a playback screen 1750 of the video content 1730.

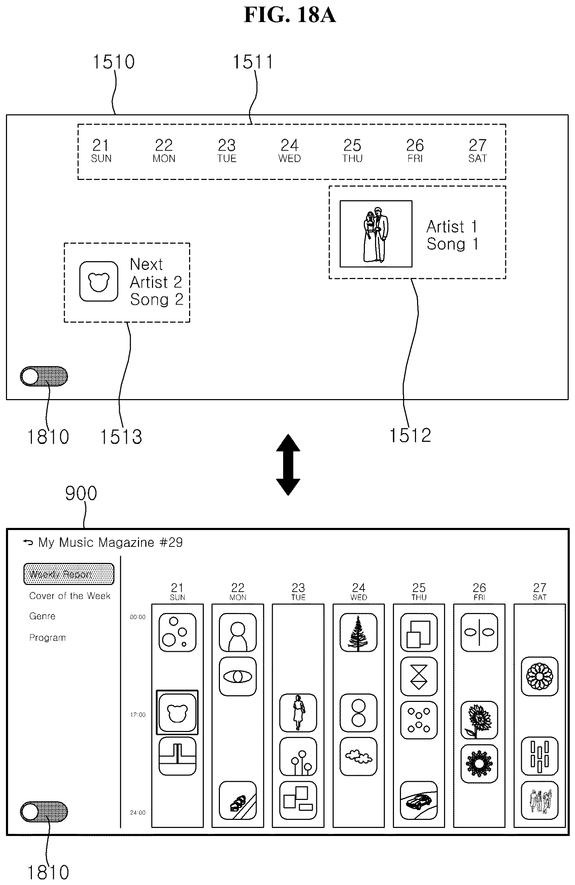

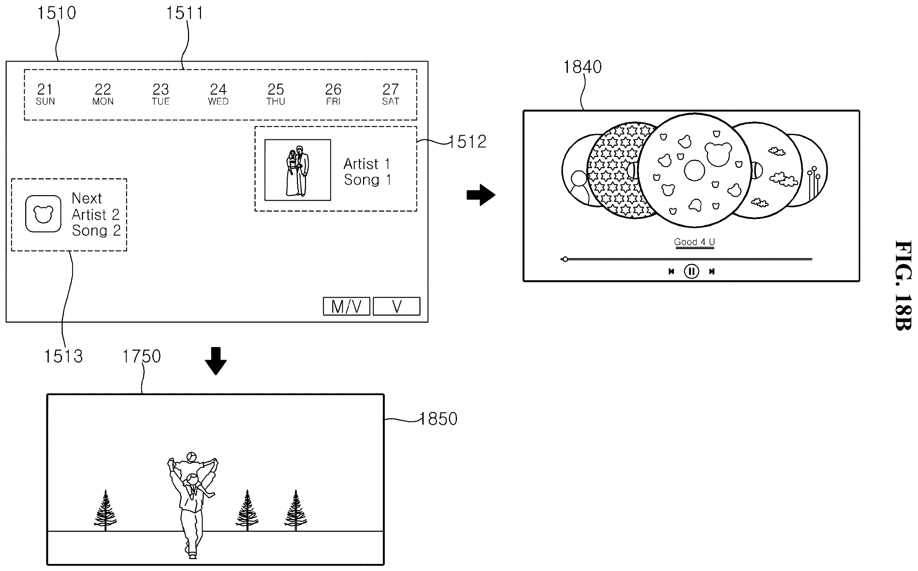

FIGS. 18A and 18B are diagrams illustrating an example of switching an AOD screen to another screen according to one embodiment of the present disclosure.

Referring to FIG. 18A, the display device 100 may display the first AOD screen *1510* under the low power mode. The first AOD screen 1510 may further include a toggle button 1810. The toggle button 1810 may be a screen for switching the first AOD screen 1510 to the music magazine screen 900. The toggle button 1810 may be a button for switching the power mode of the display device 100 to the low power mode or the normal power mode.

The display device 100 may switch the first AOD screen 1510 to the music magazine screen 900 according to a command for selecting the toggle button 1810. The music magazine screen 900 may also include the toggle button 1810.

When the display device 100 receives a command to select the toggle button 1810 while playing music of a music item included on the music magazine screen 900, the display device 100 may switch the music magazine screen 900 to the first AOD screen 1510.

In this way, according to an embodiment of the present disclosure, a user may easily switch between the AOD screen and the music magazine screen through a toggle button without a separate input for turning the power of the display device 100 on/off.

Referring to FIG. 18B, the display device 100 may display the first AOD screen 1510 under the low power mode. The first AOD screen 1510 may further include a music video switching button 1820 and a video switching button 1830.

The music video switching button 1820 may be a button for switching the first AOD screen 1510 to a screen that plays the music video corresponding to the currently playing music.

The video transition button 1830 may be a button for switching the first AOD screen *1510* to a screen that plays video content that was played along with the currently playing music.

The display device 100 may switch the first AOD screen 1510 to an audio player playback screen 1840 according to a command for selecting the music video switching button 1820. The audio player playback screen 1840 may be a screen that plays a music video corresponding to the currently playing music.

The display device 100 may switch the first AOD screen 1510 to a video player playback screen 1850 according to a command for selecting a video switching button 1830. The video player playback screen 1850 may be a screen that plays video content that was played along with the currently playing music.

In this way, according to an embodiment of the present disclosure, switching between the AOD screen and the video playback screen may be easily performed through switching buttons included on the AOD screen.

A display device 100 according to an embodiment of the present disclosure may comprise a display 180 configured to play a video content; and a controller 170 configured to obtain information of the video content, music being output together with the video content, and a playback point of the video content corresponding to the output point of the music, obtain music information corresponding to the music, and display, on the display, a music magazine screen 900 based on the information of the video content the playback point, and a music history including the music information according to a request.
wherein the music magazine screen 900 may be a screen for browsing a plurality of music items corresponding to each of the plurality of music played together with the video content according to a viewing schedule, and each music item may include at least a portion of the music information.

The controller 170 may, when a pointer controlled by a remote control device is located at any one of the plurality of music items, display, on the display, a music play button for playing the music corresponding to the music item and a video content play button for playing the video content that was played together with the music.

The display device 100 may further comprise a network interface 133 configured to communicate with a server 500, the controller 170 may extract the music through a voice analysis model that extracts music from audio being played together with the video content, transmit at least a part of the extracted music to the server through the network interface, and receive the music information from the server,

The voice analysis model may be a model based on an artificial neural network that learns a corresponding pattern between a sound source and a spectrogram corresponding to the audio.

The display device 100 may further comprise a network interface 133 configured to communicate with a server 500, the controller 170 may determine whether the music is played based on a text included in a subtitle displayed together with the video content, and if it is determined that the music is played, transmit at least a part of the music being played to the server through the network interface, and receive the music information from the server.

The controller 170 may, when the music information is searched during playback of the video content, display a search result notification indicating that the music information has been searched on the display.

The controller 170 may display the music information on the display when the music information is searched during playback of the video content and the music is playing.

The controller 170 may display, on the display, a music information summary notification including music information about music played together with the video content after the playback of the video content ends.

The display device 100 may further compirse a memory 140 configured to store a code corresponding to music information; and a network interface 133 configured to communicate with a server 500, the controller 170 may transmit the code to the server according to receiving a call request of an application, and receive the music information corresponding to the code from the server.

The display device 100 may further comprise a memory 140 configured to store the music history, the controller 170 may generate the music magazine screen based on the stored music history according to receiving a call request of an application, and display the generated music magazine screen on the display.

According to an embodiment of the present disclosure, the-described method may be implemented with codes readable by a processor on a medium in which a program is recorded. Examples of the medium readable by the processor include a ROM (Read Only Memory), a Random Access Memory (RAM), a CD-ROM, a magnetic tape, a floppy disk, an optical data storage device, and the like.

The-described display device is not limited to the configuration and method of the-described embodiments, but the embodiments may be configured by selectively combining all or part of each embodiment such that various modifications may be made.

## Claims

1. A display device (100), comprising:
a display (180) configured to play a video content; and
a controller (170),
chraterzied in that the controller (170) is configured to:
obtain information of the video content, music being output together with the video content, and a playback point of the video content corresponding to the output point of the music,
obtain music information corresponding to the music, and
display, on the display (180), a music magazine screen based on the information of the video content the playback point, and a music history including the music information according to a request.

2. The display device (100) of claim 1, wherein the music magazine screen is a screen for browsing a plurality of music items corresponding to each of the plurality of music played together with the video content according to a viewing schedule, and
each music item includes at least a portion of the music information.

3. The display device (100) of claim 2, wherein the controller (170) is further configured to:
when a pointer controlled by a remote control device is located at any one of the plurality of music items, display, on the display, a music play button for playing the music corresponding to the music item and a video content play button for playing the video content that was played together with the music.

4. The display device (100) of claim 1, 2, or 3, further comprising a network interface (133) configured to communicate with a server,
wherein the controller (170) is further configured to:
extract the music through a voice analysis model that extracts music from audio being played together with the video content,
transmit at least a part of the extracted music to the server through the network interface, and
receive the music information from the server,
wherein the voice analysis model is a model based on an artificial neural network that learns a corresponding pattern between a sound source and a spectrogram corresponding to the audio.

5. The display device (100) of any one of claims 1 to 4, further comprising a network interface (133) configured to communicate with a server,
wherein the controller (170) is further configured to:
determine whether the music is played based on a text included in a subtitle displayed together with the video content, and
if it is determined that the music is played, transmit at least a part of the music being played to the server through the network interface, and
receive the music information from the server.

6. The display device (100) of any one of claims 1 to 5, wherein the controller (170) is further configured to:
when the music information is searched during playback of the video content, display a search result notification indicating that the music information has been searched on the display.

7. The display device (100) of any one of claims 1 to 6, wherein the controller (170) is further configured to:
display the music information on the display when the music information is searched during playback of the video content and the music is playing.

8. The display device (100) of any one of claims 1 to 7, wherein the controller (170) is further configured to display, on the display, a music information summary notification including music information about music played together with the video content after the playback of the video content ends.

9. The display device (100) of any one of claims 1 to 8, further comprising:
a memory (140) configured to store a code corresponding to music information; and
a network interface (133) configured to communicate with a server,
wherein the controller (170) is further configured to:
transmit the code to the server according to receiving a call request of an application, and
receive the music information corresponding to the code from the server.

10. The display device (100) of any one of claims 1 to 9, further comprising a memory (140) configured to store the music history,
wherein the controller (170) is further configured to:
generate the music magazine screen based on the stored music history according to receiving a call request of an application, and
display the generated music magazine screen on the display.

11. A method of operating a display device (100), comprising:
playing video content;
obtaining information of the video content, music being output together with the video content, and a playback point of the video content corresponding to the output point of the music;
obtaining music information corresponding to the music; and
displaying a music magazine screen based on the information of the video content the playback point, and a music history including the music information according to a request.

12. The method of claim 11, wherein the music magazine screen is a screen for browsing a plurality of music items corresponding to each of the plurality of music played together with the video content according to a viewing schedule, and
each music item includes at least a portion of the music information.

13. The method of claim 12, further comprising:
when a pointer controlled by a remote control device is located at any one of the plurality of music items, displaying a music play button for playing the music corresponding to the music item and a video content play button for playing the video content that was played together with the music.

14. The method of claim 11, 12, or 13, wherein the obtaining the music comprises:
extracting the music through a voice analysis model that extracts music from audio being played together with the video content,
wherein the obtaining the music information comprises:
transmitting at least a part of the extracted music to a server, and
receiving the music information from the server,
wherein the voice analysis model is a model based on an artificial neural network that learns a corresponding pattern between a sound source and a spectrogram corresponding to the audio.

15. The method of any one of claims 11 to 14, wherein obtaining the music information comprises:
determining whether the music is played based on a text included in a subtitle displayed together with the video content, and
if it is determined that the music is played, transmitting at least a part of the music being played to the server, and
receiving the music information from the server.
